# EUROPÄISCHE PATENTSCHRIFT

(11) **EP 0 828 549 B1**
(45) Veröffentlichungstag und Bekanntmachung des Hinweises auf die Patenterteilung: **29.08.2001**
(21) Anmeldenummer: 96914160.5
(22) Anmeldetag: 02.05.1996
(51) Int. Cl.: B01D 53/50, B01D 53/68, B01D 53/83

(54) **VERFAHREN ZUR TROCKENEN ENTSCHWEFELUNG EINES VERBRENNUNGSABGASES**
PROCESS FOR THE DRY DESULPHURISATION OF A COMBUSTION GAS
PROCEDE DE DESULFURATION A SEC D'UN GAZ DE COMBUSTION

(30) Priorität: 16.05.1995 DE 19517863
(43) Veröffentlichungstag der Anmeldung: 18.03.1998
(73) Patentinhaber: mg technologies ag, 60325 Frankfurt am Main (DE)
(72) Erfinder: BEISSWENGER, Hans, D-65812 Bad Soden (DE); THÖNE, Bernhard, D-61169 Friedberg (DE); KLEE, Wolfram, D-61250 Usingen (DE)
(74) Vertreter: Revesz, Veronika
(86) Internationale Anmeldenummer: EP9601808
(87) Internationale Veröffentlichungsnummer: WO9636421

(56) Entgegenhaltungen:
- EP-A- 0 129 273
- EP-A- 0 301 272
- DE-A- 3 235 558
- DE-A- 3 526 008
- DE-C- 4 104 180

## Beschreibung

Die Erfindung betrifft ein Verfahren zur trockenen Entschwefelung eines Verbrennungsabgases, bei dem das in einem Verbrennungsraum anfallende, Flugasche, Wasserdampf sowie Schwefeloxide und andere gasförmige Schadstoffe enthaltende Verbrennungsabgas in einem ersten Abscheider entstaubt wird, bei dem das entstaubte Verbrennungsabgas mit einem aus CaO und/oder Ca(OH)₂ und/oder CaCO₃ bestehenden Absorptionsmittel gemischt einer aus einem Wirbelschichtreaktor, einem zweiten Abscheider und einer Rückführleitung bestehenden zirkulierenden Wirbelschicht zugeführt wird, wobei man das Verbrennungsabgas im Reaktor mit Wasser auf eine Temperatur von 50 bis 90°C abkühlt. Die im zweiten Abscheider anfallenden Feststoffteilchen werden teilweise in den Wirbelschichtreaktor und teilweise in den Bereich des Verbrennungsraums geführt, wo Temperaturen von 850 bis 1050°C herrschen. Das Verfahren wird zur Entschwefelung von Abgasen eingesetzt, die bei der Verbrennung von festen und flüssigen Brennstoffen, insbesondere Kohle und Öl, sowie bei der Verbrennung von Müll und Klärschlamm anfallen.

Aus DE-A-41 04 180 ist ein Verfahren zur trockenen Entschwefelung von Abgasen einer Kesselanlage durch Zugabe kalkhaltiger Sorbentien bekannt, bei dem grob aufgemahlener Kalk (CaCO₃) mit einer mittleren Korngröße von 200 mm in einen Bereich der Kesselanlage eingebracht wird, in dem die Abgase eine Temperatur von 800 bis 900°C aufweisen, bei dem die Abgase nach wärmetechnischer Ausnutzung in einem ersten elektrostatischen Staubabscheider klassierend entstaubt werden, worauf der grobkörnig anfallende Anteil einer Mahlung auf eine mittlere Korngröße von 5 bis 10 mm unterworfen wird und der mittelgrobkörnig sowie der feinkörnig anfallende Anteil aus dem System abgeführt werden, bei dem der auf 5 bis 10 mm aufgemahlene Anteil zusammen mit Wasser und den Abgasen einer aus Wirbelschichtreaktor, Abscheider und Rückführleitung bestehenden zirkulierenden Wirbelschicht zugeführt wird und bei dem die Abgase schließlich in einem zweiten elektrostatischen Staubabscheider entstaubt und in die Umgebung abgegeben werden und die anfallenden CaSO₃- und CaSO₄-haltigen Rückstände teils in den Wirbelschichtreaktor und teils in die Kesselanlage zurückgeführt werden. Bei diesem bekannten Verfahren wird die
Entstaubung im ersten, dem Kessel nachgeschalteten elektrostatischen Staubabscheider bei 90 bis 160°C durchgeführt, und die Temperatur in der zirkulierenden Wirbelschicht wird durch entsprechende Bemessung der Wasserzugabe auf 50 bis 90°C eingestellt.

Es ist ferner bekannt, daß bei den trockenen Entschwefelungsverfahren die Umsetzung der Absorptionsmittel mit SO₂ nur dann zufriedenstellend erfolgt, wenn ein stöchiometrischer Überschuß des Absorptionsmittels vorhanden ist. Ein vergleichsweise geringer Absorptionsmittelüberschuß wird erreicht, wenn als Absorptionsmittel für die trockene Entschwefelung CaO oder Ca(OH)₂ verwendet werden und wenn die Absorptionsmittel feinkörnig und damit reaktiv sind. Allerdings geht insbesondere in einer zirkulierenden Wirbelschicht ein Teil des CaO bzw. des Ca(OH)₂ dadurch verloren, daß sich Calciumcarbonat bildet. Diese Nebenreaktion beeinflußt die Stöchiometrie der Entschwefelungsreaktion nachteilig, so daß das Absorptionsmittel CaO und/oder Ca(OH)₂ bei der trockenen Entschwefelung noch in einem nennenswerten Überschuß zugegeben werden muß; das SO₂ : Ca-Verhältnis (bezogen auf abgeschiedenes SO₂) liegt praktisch oberhalb 1 : 1,3. Es kommt hinzu, daß bei den trockenen Entschwefelungsverfahren Störungen dadurch auftreten, daß sich durch Reaktion des im Abgas enthaltenen HCl mit dem Absorptionsmittel hygroskopisches CaCl₂ bildet, das für die Entstehung nachteiliger Anbackungen und Verklebungen in der Abgasreinigungsanlage verantwortlich ist.

Der Erfindung liegt daher die Aufgabe zugrunde, ein Verfahren zur trockenen Abgasentschwefelung bereitzustellen, das zuverlässig auch mit einem SO₂ : Ca-Verhältnis (bezogen auf abgeschiedenes SO₂) von kleiner als 1 : 1,2 arbeitet und das Absorptionsmittel weitgehend der Entschwefelungsreaktion zugänglich macht sowie nachteilige Anbackungen und Verklebungen in der Abgasreinigungsanlage - insbesondere in der zirkulierenden Wirbelschicht - vermeidet. Das entstehende feste Verfahrensprodukt soll möglichst geringe Mengen an CaSO₃ und CaCO₃ sowie einen ausreichenden CaO-Anteil und wasserfreies CaSO₄ enthalten.

Die der Erfindung zugrundeliegende Aufgabe wird durch das im Patentanspruch 1 definierte Verfahren gelöst.

Dadurch, daß das als erster Abscheider dienende Elektrofilter oder der Massenkraftabscheider mit einer geringen Entstaubungsleistung gefahren wird, gelangt ein vergleichsweise großer Feststoffanteil in die zirkulierende Wirbelschicht, die vorzugsweise CaO bzw. Ca(OH)₂ enthält. Dieser Teil des Absorptionsmittels wird der Entschwefelungsreaktion erneut zugeführt, während im Elektrofilter nur ein geringer Feststoffanteil abgetrennt und aus dem Verfahrenskreislauf als festes Verfahrensprodukt abgeführt wird. Dieser Feststoffanteil besteht zum überwiegenden Teil aus wasserfreiem CaSO₄ und Flugasche sowie CaO. Mit dem erfindungsgemäßen Verfahren wird erreicht, daß ein SO₂ : Ca-Verhältnis (bezogen auf abgeschiedenes SO₂) von ≤ 1 : 1,2 gefahren werden kann, wobei im Reingas nur noch ein SO₂-Gehalt < 50 mg/Nm³ vorhanden ist. Das Elektrofilter hat einen relativ geringen Bedarf an elektrischer Energie. Das aus dem ersten Abscheider abgeführte Produkt kann bei Zugabe von Wasser sehr gut verfestigt werden und ist als Baustoff geeignet. Der Massenkraftabscheider kann vorteilhaft als Zyklon oder Prallabscheider gestaltet werden. Dieser Abscheider kann außerhalb des Verbrennungsraums oder in dem Teil des Verbrennungsraums angeordnet werden, in dem Temperaturen von 100 bis 700°C herrschen. Sowohl das Elektrofilter als auch der Massenkraftabscheider dienen also dem Austrag des festen Verfahrensproduktes, das kein CaSO₃ enthält und folglich nicht mehr nachoxidiert werden muß, denn im Verfahrensprodukt liegt der gebundene Schwefel als wasserfreies CaSO₄ vor.

Als besonders vorteilhaft hat es sich erwiesen, wenn das Absorptionsmittel einen mittleren Teilchendurchmesser d₅₀ von 2 bis 20 mm hat. Hierdurch wird nämlich erreicht, daß unverbrauchtes Absorptionsmittel im Elektrofilter und im Massenkraftabscheider nicht abgeschieden, sondern der zirkulierenden Wirbelschicht erneut zugeführt wird.

Wenn der Wirbelschichtreaktor im unteren Bereich einen Rost aufweist, kann das Absorptionsmittel unterhalb des Rostes, die aus dem zweiten Abscheider rückgeführten Feststoffteilchen unterhalb oder oberhalb des Rostes und das Wasser oberhalb des Rostes in den Wirbelschichtreaktor eingebracht werden. Durch diese Verfahrensgestaltung wird die Bildung von Anbackungen zuverlässig vermieden und die Fließfähigkeit der Feststoffteilchen bleibt in vollem Umfang erhalten.

Es hat sich als zweckmäßig erwiesen, wenn das Absorptionsmittel CaO und/oder Ca(OH)₂ ganz oder teilweise durch CaCO₃ ersetzt wird, welches in den Bereich des Verbrennungsraums eingebracht wird, in welches eine Temperatur von 850 bis 1050°C herrscht. Hierdurch können insbesondere die Kosten für die trockene Abgasentschwefelung herabgesetzt werden, denn bei den genannten Temperaturen entsteht aus dem CaCO₃ CaO. Durch die Zugabe von CaCO₃ kann der Wirbelschichtreaktor sehr nahe oberhalb des Taupunkts gefahren werden, da bei Verwendung von CaCO₃ das Verhältnis von SO₂ : Ca (bezogen auf abgeschiedenes SO₂) auf maximal 1 : 1,5 erhöht werden kann, denn der Preis für CaCO₃ ist wesentlich niedriger als der für CaO bzw. Ca(OH)₂ und die Schadstoffabsorption ist durch einen Ca-Überschuß begünstigt. Es ist sowohl technisch als auch wirtschaftlich optimal, wenn 50 bis 80 % des Absorptionsmittels durch CaCO₃ eingebracht werden.

Es ist zweckmäßig, wenn als zweiter Abscheider ein mehrfeldriges Elektrofilter verwendet wird und man die im letzten Feld des Elektrofilters abgeschiedenen Feststoffe aus dem Verfahrenskreislauf entfernt. Durch diese Maßnahme wird erreicht, daß die unverbrannten Kohlenstoffpartikel, die im ersten Elektrofilter nicht abgeschieden werden und die daher in die zirkulierende Wirbelschicht gelangen, aus dem entschwefelten Abgas entfernt werden.

Nach der Erfindung ist alternativ vorgesehen, daß als zweiter Abscheider ein Schlauchfilter verwendet wird, wobei der Filterkuchen einen Gehalt an CaO und/oder Ca(OH)₂ von 2 bis 5 Gew.-% hat. Durch diese alternative Verfahrensgestaltung wird erreicht, daß der Filterkuchen ein gutes Abreinigungsverhalten zeigt, denn durch den erfindungsgemäßen Gehalt an CaO und/oder Ca(OH)₂ im Filterkuchen agglomerieren die Staubteilchen des Filterkuchens in vorteilhafter Weise, so daß zwischen den einzelnen Abreinigungszyklen des Schlauchfilters ein längerer Zeitraum liegt.

Mit dem erfindungsgemäßen Verfahren kann eine hohe Entschwefelungsleistung zuverlässig eingehalten werden, wenn der Wirbelschichtreaktor 5 bis 20°C oberhalb des Taupunkts arbeitet und wenn im Wirbelschichtreaktor eine Gasgeschwindigkeit von 3 bis 10 m/sec, eine mittlere Feststoff-Verweilzeit von 20 bis 180 min sowie eine mittlere Feststoffbeladung von 1 bis 10 kg/m³ eingestellt wird. Bei diesen Verfahrensbedingungen kann auch bei hohen SO₂-Gehalten im Abgas zuverlässig ein SO₂-Gehalt im Reingas < 50 mg/Nm³ eingehalten werden. Außerdem werden Anbackungen und Verklebungen zuverlässig vermieden.

Eine Verfahrensvariante besteht darin, daß 90 bis 95 % der im zweiten Abscheider anfallenden Feststoffteilchen in den Wirbelschichtreaktor zurückgeführt werden, während die restlichen Feststoffteilchen in den Verbrennungsraum gelangen. Durch diese Maßnahme wird erreicht, daß sich aus dem CaSO₃, welches durch die Reaktion des Absorptionsmittels mit dem SO₂ entsteht, durch Oxidation im Verbrennungsraum CaSO₄ bildet. Außerdem entsteht aus CaCO₃ erneut CaO, was für die Entschwefelungsreaktion nutzbar ist.

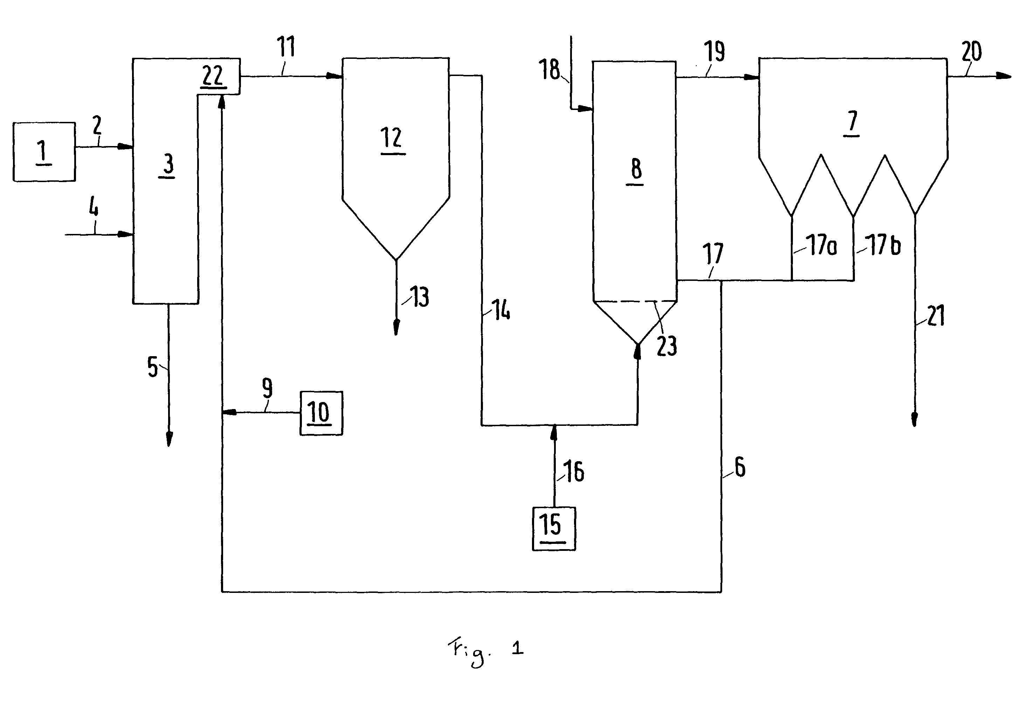

Der Gegenstand der Erfindung wird nachfolgend anhand der Zeichnung und eines Ausführungsbeispiels näher erläutert. Die Zeichnung zeigt das Fließbild des erfindungsgemäßen Verfahrens.

Aus dem Vorratsbunker (1) wird feinteilige Kohle über die Leitung (2) in den Verbrennungsraum (3) eingetragen und dort mit Luft verbrannt, die über die Leitung (4) in den Verbrennungsraum eingebracht wird. Der Verbrennungsraum (3) ist als Kessel gestaltet, wobei in der Zeichnung die zur Wärmegewinnung erforderlichen Wärmeaustauscher nicht dargestellt sind. Die bei der Verbrennung der Kohle entstehende Schlacke wird über die Leitung (5) aus dem Verbrennungsraum (3) ausgetragen. Die Verbrennungstemperatur liegt bei 1200 bis 1300°C, so daß die Schlacke zumindest teilweise in schmelzflüssiger Form anfällt. Da auch im oberen Teil des als Kessel gestalteten Verbrennungsraums (3) Wärmeaustauscherflächen angeordnet sind, herrscht dort eine Temperatur, die kleiner als die Verbrennungstemperatur ist. Beim Eintritt in den oberen Kesselraum (22) hat das Abgas eine Temperatur von 850 bis 1050°C.

Das bei der Verbrennung der Kohle entstehende Abgas enthält die Hauptbestandteile CO₂, H₂O, N₂ und O₂. Da die Verbrennung der Kohle mit einem Luftüberschuß erfolgt, ist im Abgas CO nur in Spuren enthalten. Das Abgas ist insbesondere mit den gasförmigen Verbindungen SO₂, HCl und NOₓ verunreinigt. SO₂ und HCl werden aus den in der Kohle enthaltenen schwefel- und chlorhaltigen Verbindungen bei der Verbrennung gebildet. Die als NOₓ bezeichneten Oxide des Stickstoffs entstehen während der Verbrennung aus den in der Kohle enthaltenen Stickstoffverbindungen und teilweise durch Oxidation des in der Luft enthaltenen Stickstoffs. Das Verbrennungsabgas enthält pro Nm³ ca. 700 mg SO₂, 80 mg HCl und 150 mg NOₓ, letzteres berechnet als NO₂. Im Abgas sind ferner ca. 20 mg SO₃ enthalten. Bei der Verbrennung wird im Verbrennungsabgas ein Teil der Schlacke in Form von staubartiger Flugasche suspendiert, so daß das Abgas im oberen Kesselraum (22) einen Gehalt an staubförmiger Flugasche von ca. 10 g/Nm³ hat. Die Flugasche enthält auch feinteiligen, unverbrannten Kohlenstoff.

Über die Leitung (6) werden 5 bis 10 % der Feststoffe in den oberen Kesselraum (22) eingebracht, die in den ersten Feldern des als Elektrofilter gestalteten zweiten Abscheiders (7) anfallen, welcher dem Wirbelschichtreaktor (8) nachgeschaltet ist. Der in der Leitung (6) geführte Feststoff besteht aus Flugasche sowie aus CaSO₃, das im oberen Kesselraum (22) nahezu quantitativ zu CaSO₄ oxidiert wird, aus CaCO₃, das im oberen Kesselraum (22) in CO₂ und CaO zerfällt, aus geringen Mengen CaCl₂, das im oberen Kesselraum (22) teilweise zerfällt, sowie aus unverbrauchtem CaO und Ca(OH)₂, wobei das Ca(OH)₂ im oberen Kesselraum (22) in CaO umgewandelt wird. Außerdem wird in die Leitung (6) über die Leitung (9) aus dem Vorratsbehälter (10) CaCO₃ mit einer Teilchengröße von ca. 10 mm eingebracht. Auch dieses CaCO₃ zerfällt im oberen Kesselraum (22) unter Bildung von CaO. Durch den in der Leitung (6) geführten Feststoff erhöht sich der Feststoffgehalt des im oberen Kesselraum (22) strömenden Verbrennungsabgases auf insgesamt ca. 40 g/Nm³. Dem mit den gasförmigen Schadstoffen verunreinigten sowie mit Flugasche und rückgeführten Feststoffteilchen beladenen Verbrennungsabgas wird an den Wärmeaustauscherflächen, die sich im oberen Kesselraum (22) befinden und in der Zeichnung nicht dargestellt sind, Wärme entzogen, wobei eine Abkühlung auf 100 bis 180°C erfolgt. Das abgekühlte Verbrennungsabgas gelangt mit dieser Temperatur über die Leitung (11) in das Elektrofilter (12).

Im Elektrofilter (12), das als erster Abscheider dient, wird nur ein Teil der staubförmigen Flugasche und der Feststoffteilchen abgeschieden, so daß aus dem Elektrofilter (12) über die Leitung (14) ein Abgasstrom abfließt, der noch einen Feststoffgehalt von ca. 36 g/Nm³ hat, was einer Entstaubungsleistung von 10 % entspricht. Im Feststoff, der aus dem Elektrofilter (12) mit dem Gasstrom ausgetragen wird, ist das CaO angereichert, während die im Elektrofilter (12) abgeschiedenen Feststoffteilchen zum überwiegenden Teil aus wasserfreiem CaSO₄ und staubförmiger Flugasche bestehen. Dieses Verfahrensprodukt wird über die Leitung (13) abgeführt und kann wegen seines hohen CaSO₄-Anteils als Bauzusatzstoff verwendet werden. Das Elektrofilter (12) hat also den Zweck, das mit den gasförmigen Schadstoffen beladene Absorptionsmittel und einen Teil der staubförmigen Flugasche aus dem Stoffkreislauf abzutrennen, während unverbrauchtes Absorptionsmittel und das im oberen Kesselraum (22) gebildete Absorptionsmittel dem Stoffkreislauf zugeführt werden. Dies wird dadurch erreicht, daß das Elektrofilter (12) mit einer vergleichsweise geringen untypischen Entstaubungsleistung gefahren wird.

Wird das Elektrofilter (12) durch einen Massenkraftabscheider ersetzt, übernimmt er den Austrag des Verfahrensprodukts. Der Massenkraftabscheider ist vorteilhaft als Zyklon oder Prallabscheider gestaltet und kann entweder im oberen Kesselteil (22) angeordnet oder dem oberen Kesselteil (22) nachgeordnet werden, wobei es lediglich darauf ankommt, daß der Massenkraftabscheider im Temperaturbereich von 100 bis 700°C arbeitet. Auch der Massenkraftabscheider wird mit geringer Abscheideleistung gefahren.

Der in der Leitung (14) geführte feststoffhaltige Abgasstrom wird unterhalb des Rostes (23) in den Wirbelschichtreaktor (8) eingebracht. Diesem Abgasstrom wird aus dem Vorratsbehälter (15) über die Leitung (16) Ca(OH)₂ mit einer mittleren Teilchengröße von 3 bis 4 mm in einer Menge von 1,3 g/Nm³ zugegeben. Oberhalb des Rostes (23) werden über die Leitung (17) 90 bis 95 % der Feststoffteilchen in den Wirbelschichtreaktor (8) eingetragen, die in den ersten Feldern des Elektrofilters (7) abgeschieden werden. Über die Leitung (18), die in einer Düse mündet, wird Wasser in den Wirbelschichtreaktor (8) eingebracht, wodurch im Wirbelschichtreaktor (8) eine Temperatur von ca. 65 bis 70°C eingestellt wird. Diese Temperatur liegt etwa 15 bis 20°C oberhalb des Taupunkts des Verbrennungsabgases. Im Wirbelschichtreaktor (8) beträgt die Gasgeschwindigkeit ca. 3 bis 5 m/sec und die durchschnittliche Verweilzeit der Feststoffteilchen liegt bei ca. 60 min. Im Wirbelschichtreaktor (8) beträgt die durchschnittliche Feststoffbeladung ca. 6 kg/m³. Die gasförmigen Schadstoffe SO₂ und HCl werden im Wirbelschichtreaktor (8) weitgehend vom feinteiligen, reaktiven Absorptionsmittel gebunden. Durch die erfindungsgemäße Zufuhr der Feststoffteilchen und des Wassers in den Wirbelschichtreaktor (8) werden Anbackungen vermieden, und die Feststoffe agglomerieren nicht so weit, daß es zu Betriebsstörungen kommt.

Der mit Feststoffen beladene Abgasstrom verläßt den Wirbelschichtreaktor (8) über die Leitung (19) und gelangt in den als mehrfeldriges Elektrofilter gestalteten zweiten Abscheider (7). Dieses Elektrofilter wird mit einer hohen Entstaubungsleistung gefahren, so daß das über die Reingasleitung (20) aus dem Elektrofilter (7) abströmende Reingas nur noch einen Staubgehalt < 30 mg/Nm³ hat. Das Reingas hat einen SO₂-Gehalt von < 50 mg/Nm³ und einen HCl-Gehalt < 5 mg/Nm³. Es kann also nach der Abtrennung von NOₓ ohne weitere Reinigungsmaßnahmen in die Atmosphäre abgegeben werden. Die in den ersten Feldern des Elektrofilters (7) abgeschiedenen Feststoffe werden über die Leitungen (17a) und (17b) der Rückführleitung (17) zugeführt. 92 bis 95 % der in der Rückführleitung (17) geführten Feststoffe gelangen erneut in den Wirbelschichtreaktor (8), während die restlichen Feststoffe über die Leitung (6) in den oberen Kesselraum (22) eingetragen werden. Die im letzten Feld des Elektrofilters (7) abgeschiedenen Feststoffteilchen werden über die Leitung (21) ausgetragen. Wenn diese Feststoffe einen hohen Kohlenstoffgehalt haben, können sie dem Verbrennungsraum (3) zugeführt werden; ansonsten werden sie auf einer Deponie abgelagert oder mit den Verfahrensprodukten gemischt, die dem Elektrofilter (12) über die Leitung (13) entnommen werden.

## Patentansprüche

1. Verfahren zur trockenen Entschwefelung eines Verbrennungsabgases, welches in einem Verbrennungsraum (3) entsteht, wobei man das Flugasche, Wasserdampf, rückgeführte Feststoffteilchen, Schwefeloxide und andere gasförmige Schadstoffe enthaltende Verbrennungsgas in einen ersten Abscheider (12) leitet und daraus das Abgas teilentstaubt mit einem Feststoffgehalt von 5 bis 40 g/Nm³ abzieht, wobei der erste Abscheider entweder als bei einer Temperatur von 100 bis 180°C betriebener Elektrofilter oder bei einer Temperatur von 100 bis 700°C betriebener Massenkraftabscheider ausgebildet ist, das teilentstaubte Abgas wird mit einem aus CaO und/oder Ca(OH)₂ und/oder CaCO₃ bestehenden Absorptionsmittel gemischt und in einen Wirbelschichtreaktor (8) geleitet, der zu einer zirkulierenden Wirbelschicht gehört, die einen mit dem oberen Bereich des Wirbelschichtreaktors verbundenen zweiten Abscheider (7) und eine Feststoff-Rückführleitung (17) vom zweiten Abscheider zum Reaktor aufweist, dem Wirbelschichtreaktor wird Wasser zugeführt und die Temperatur des Verbrennungsabgases im Reaktor auf 50 bis 90°C abgekühlt, Abgas und Feststoffe werden gemeinsam zum zweiten Abscheider (7) geführt, der als Elektrofilter oder Schlauchfilter ausgebildet ist, aus dem zweiten Abscheider zieht man gereinigtes Abgas und, getrennt davon, abgeschiedene Feststoffe ab, von denen man einen Teil durch die Rückführleitung in den Wirbelschichtreaktor (8) zurückführt und wobei man einen weiteren Teil der abgeschiedenen Feststoffe vom zweiten Abscheider (7) in den Bereich des Verbrennungsraums (3) leitet, in dem Temperaturen von 850 bis 1050°C herrschen, und das mit den gasförmigen Schadstoffen beladene Absorptionsmittel zusammen mit der Flugasche über den Austrag des ersten Abscheiders aus dem Verfahrenskreislauf abgefülert wird.

2. Verfahren nach Anspruch 1, **dadurch gekennzeichnet**, daß als zweiter Abscheider (7) ein mehrfeldriges Elektrofilter verwendet wird und daß die im letzten Feld des Elektrofilters abgeschiedenen Feststoffe aus dem Verfahrenskreislauf entfernt werden.

3. Verfahren nach Anspruch 1, **dadurch gekennzeichnet**, daß als zweiter Abscheider (7) ein Schlauchfilter verwendet und ein Filterkuchen daraus abgezogen wird, der einen Gehalt an CaO und/oder Ca(OH)₂ von 2 bis 5 Gew.-% hat.

4. Verfahren nach Anspruch 1, **dadurch gekennzeichnet**, daß der Wirbelschichtreaktor (8) 5 bis 20°C oberhalb des Taupunkts arbeitet und daß im Wirbelschichtreaktor eine Gasgeschwindigkeit von 3 bis 10 m/sec, eine mittlere Feststoff-Verweilzeit von 20 bis 180 min sowie eine mittlere Feststoffbeladung von 1 bis 10 kg/m³ eingestellt wird.

5. Verfahren nach Anspruch 1, **dadurch gekennzeichnet**, daß 90 bis 95 % der im zweiten Abscheider (7) anfallenden Feststoffteilchen in den Wirbelschichtreaktor (8) zurückgeführt werden, während die restlichen Feststoffteilchen in den Verbrennungsraum (3) gelangen.

## Claims

1. A process for the dry desulphurisation of a combustion exhaust gas which is produced in a combustion chamber (3), in which the combustion exhaust gas containing fly ash, water vapour, recycled solids particles, sulphur oxides and other gaseous pollutants is passed into a first separator (12) and the exhaust gas is removed therefrom in partially dedusted form with a solids content of 5 to 40 g/sm³, with the first separator being in the form either of an electrostatic precipitator operated at a temperature of 100 to 180°C or a gravity separator operated at a temperature of 100 to 700°C, the partially dedusted exhaust gas is mixed with an absorbent consisting of CaO and/or Ca(OH)₂ and/or CaCO₃ and is passed into a fluidised bed reactor (8) which forms part of a circulating fluidised bed system which has a second separator (8) connected to the upper region of the fluidised bed reactor and a solids return line (17) from the second separator to the reactor, water is supplied to the fluidised bed reactor and the temperature of the combustion exhaust gas is cooled to 50 to 90°C in the reactor, exhaust gas and solids are sent jointly to the second separator (7), which is in the form of an electrostatic precipitator or bag filter, purified exhaust gas and, separately therefrom, solids which have been separated off are withdrawn from the second separator, a portion of which is returned through the return line into the fluidised bed reactor (8) and in which a further portion of the solids separated off are passed from the second separator (7) into the region of the combustion chamber (3), in which the temperatures are from 850 to 1050°C, and the absorbent which is laden with the gaseous pollutants, together with the fly ash, is removed from the process circuit via the discharge of the first separator.

2. A process according to Claim 1, **characterised in that** a multi-field electrostatic precipitator is used as the second separator (7) and that the solids separated off in the last field of the electrostatic precipitator are removed from the process circuit.

3. A process according to Claim 1, **characterised in that** a bag filter is used as the second separator (7) and a filter cake is withdrawn therefrom which has a content of CaO and/or Ca(OH)₂ of 2 to 5% by weight.

4. A process according to Claim 1, **characterised in that** the fluidised bed reactor (8) operates at 5 to 20°C above the dew point and that a gas velocity of 3 to 10 m/sec, an average solids dwell time of 20 to 180 min and an average solids load of 1 to 10 kg/m³ is set in the fluidised bed reactor.

5. A process according to Claim 1, **characterised in that** 90 to 95% of the solids particles produced in the second separator (7) are recycled into the fluidised bed reactor (8), while the remaining solids particles pass into the combustion chamber (3).

## Revendications

1. Procédé de désulfuration à sec d'un effluent gazeux de combustion qui se forme dans une chambre (3) de combustion en envoyant le gaz de combustion contenant de la cendre volante, de la vapeur d'eau, des particules de matières solides recyclées, des oxydes d'azote et d'autres substances polluantes gazeuses à un premier séparateur (12) et en soutirant ensuite l'effluent gazeux partiellement dépoussiéré en ayant une teneur en matières solides de 5 à 40 g/m³ normal, le premier séparateur étant constitué soit d'un électrofiltre fonctionnant à une température de 100 à 180°C, soit d'un séparateur à force d'inertie fonctionnant à une température de 100 à 700°C, en mélangeant l'effluent gazeux partiellement dépoussiéré à un agent d'absorption constitué de CaO et/ou Ca(OH)₂ et/ou de CaCO₃ et en l'envoyant dans un réacteur (8) à un lit fluidisé, qui fait partie d'un lit fluidisé circulant, qui a un deuxième séparateur (7) communiquant avec la partie supérieure du réacteur à lit fluidisé et un conduit (17) de retour de matières solides allant du deuxième séparateur au réacteur, en envoyant au réacteur au lit fluidisé de l'eau et en refroidissant l'effluent gazeux de combustion dans le réacteur à une température de 50 à 90°C, en envoyant l'effluent gazeux et des matières solides ensemble au deuxième séparateur (7) qui est constitué en électrofiltre ou en filtre à manche, en soutirant du deuxième séparateur de l'effluent gazeux épuré et, indépendamment de cela, des matières solides séparées dont on retourne une partie par le conduit de retour au réacteur (8) à lit fluidisé, une partie des matières solides séparées étant envoyée du deuxième séparateur (7) dans la zone de la chambre (3) de combustion dans laquelle il règne des températures de 850 à 1050°C et l'agent d'absorption chargé de substances polluantes gazeuses étant évacué du circuit du procédé en même temps que la cendre volante par le déchargement du premier séparateur.

2. Procédé suivant la revendication 1, **caractérisé en ce qu**'il consiste à utiliser comme deuxième séparateur (7) un électrofiltre à plusieurs champs et à éliminer du circuit du procédé les matière solides séparées dans le dernier champ de l'électrofiltre.

3. Procédé suivant la revendication 1, **caractérisé en ce qu**'il consiste à utiliser comme deuxième séparateur (7) un filtre à manche et à en soutirer un gâteau de filtre qui a une teneur en CaO et/ou en Ca(OH)₂ de 2 à 5% en poids.

4. Procédé suivant la revendication 1, **caractérisé en ce qu**'il consiste à faire fonctionner le réacteur (8) à lit fluidisé à une température de 5 à 20°C supérieure au point de rosée et à établir dans le réacteur à lit fluidisé une vitesse des gaz de 3 à 10 m/seconde, une durée moyenne de séjour des matières solides de 20 à 180 minutes ainsi qu'un en-cours moyen des matières solides de 1 à 10 kg/m³.

5. Procédé suivant la revendication 1, **caractérisé en ce qu**'il consiste à retourner de 90 à 95% des particules de matières solides se produisant dans le deuxième séparateur (7) au réacteur (8) à lit fluidisé, tandis que les particules de matières solides restantes vont dans la chambre (3) de combustion.
